# EUROPEAN PATENT SPECIFICATION

(11) **EP 0 454 261 B1**
(45) Date of publication and mention of the grant of the patent: **27.09.1995**
(21) Application number: 91200981.8
(22) Date of filing: 24.04.1991
(51) Int. Cl.: B61D 19/00, E05D 15/24

(54) **Overhead door assembly**
Aufzugstürzusammenbau
Assemblage de porte relevable

(30) Priority: 24.04.1990 NL 9000978
(43) Date of publication of application: 30.10.1991
(73) Proprietor: TEBEL PNEUMATIEK B.V., 8912 AV Leeuwarden (NL)
(72) Inventor: Epema, Sytse, NL-9061 AL Giekerk (NL); van der Sloot, Bart, NL-9024 EN Weidum (NL)
(74) Representative: Smulders, Theodorus A.H.J., Ir.

(56) References cited:
- DE-A- 2 350 100
- FR-A- 1 175 951
- GB-A- 2 083 545
- US-A- 3 034 575
- US-A- 3 079 987
- US-A- 4 350 199
- US-A- 4 880 046

## Description

This invention relates to an overhead door assembly, suitable in particular for use in track vehicles, comprising an overhead door, vertical guide members for guiding the overhead door in vertical direction, and horizontal guide members for guiding the overhead door in horizontal direction, as well as driving means for opening and closing the door.

Such overhead door assemblies are known from practice and are used for example for sheds, garages and the like. An overhead door may consist of a single stiff panel and is then usually referred to by the term up-and-over door. There are also overhead doors known which are built up from a plurality of panels extending horizontally across the entire width of the door and hingedly interconnected. Such articulated doors are referred to by the term sliding door.

The known overhead doors cannot be used in track vehicles without any objection, because the use in track vehicles involve entirely different forces than in stationary uses. Doors of track vehicles may for instance be subject to very strong suction forces, but also to great compressive forces when the end doors of carriages are involved. Under these conditions, the doors should remain closed hermetically and hardly vibrate, if at all.

US-A-3045575 discloses an overhead door for use in trucks, trailers etcetera. The known door comprises a number of horizontally disposed panels which are pivotally connected to each other. The door has rollers running in tracks having a vertical section at each side of the opening for which the door is intended. The vertical track sections align with carved sections which again align with overhead horizontal sections. The vertical sections can pivot to and fro about an axis near their upper end. In order to shut the door the door is first lowered until its lower edge is near the floor of the truck. Thereby the upper part of the door is firmly pushed against the door frame. Then the vertical sections of the tracks are pulled against the door frame at their lower ends by means of levers which must be actuated by hand from the outside. Driving means for actuating the door have not been disclosed.

The object of this invention is to provide an improved overhead door assembly which is suitable in particular for use in track vehicles. To that end, according to the invention an overhead door assembly of the type described hereinabove is characterized in that the driving means are connected to the upper part of the door and in that the vertical guide means and the driving means cooperate with each other and with the overhead door in such a way that when the overhead door is being closed, it is first brought in front of a door opening to be closed off by the driving means and subsequently is brought substantially by movement of the vertical guide means into a position where it closes off the door opening through a plugging movement.
(See further original specification from page 2 line 8)

Hereinafter the invention will be further described, by way of example, with reference to the accompanying drawings of one embodiment. In said drawings:
Fig. 1 is a diagrammatic perspective view of an embodiment of a door assembly according to the invention;
Fig. 2 is a diagrammatic vertical section taken on the line II-II of Fig. 1, showing in more detail a part of an embodiment of a door assembly according to the invention;
Fig. 3 is a detail of Fig. 2;
Fig. 4 is a section taken on the line IV-IV of Fig. 3;
Fig. 5 is a diagrammatic side elevational view similar to that of Fig. 2, of an embodiment of a complete door assembly according to the invention;
Fig. 6 shows an embodiment of a manually operated device for a door assembly according to the invention; and
Fig. 7 is a diagram of a variant of Fig. 1.

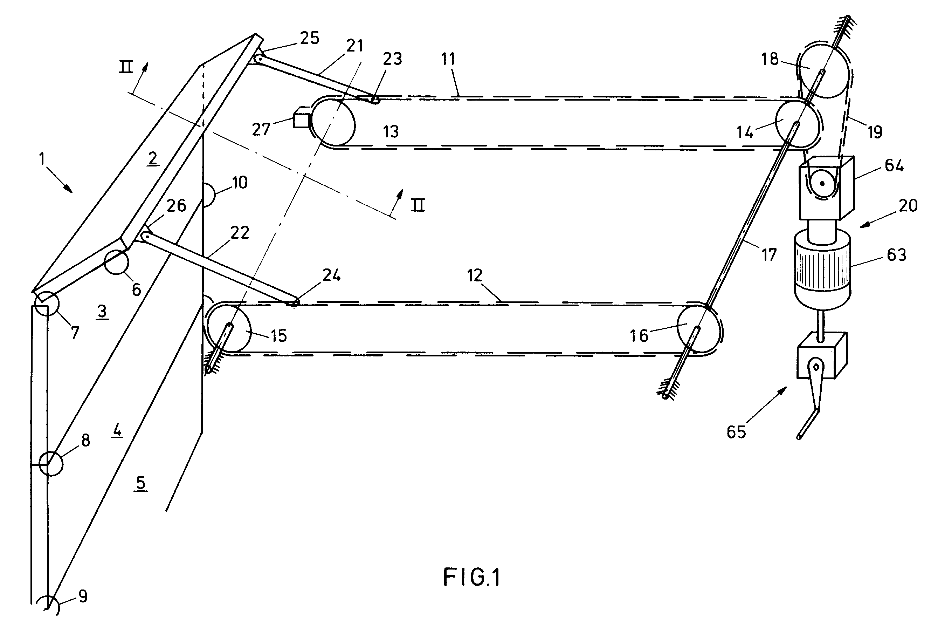

Fig. 1 is a diagrammatic perspective view of an embodiment of an overhead door assembly according to the invention, comprising an overhead door 1, which in this embodiment is articulate and is built up from panels 2-5. The panels 2-5 extend in the transverse direction of the door and are hingedly interconnected along horizontal hinge lines. Disposed on opposite sides of the door at the level of the hinge lines and adjacent the terminal edges of the bottom and the top panel 5 and 2, respectively, are guide wheels, of which a number, designated by 6-10, are visualized in Fig. 1. By means of the guide wheels the door is guided along corresponding guide rails during opening and closing, as will be described further hereinafter.

Fig. 1 further shows two endless chains or other similar transport members 11, 12, extending rearwardly on opposite sides of the door opening adjacent the top of the door and each having been passed over two chain wheels 13,14 and 15,16, respectively, or rope sheaves, (toothed) pulleys or the like. For brevity's sake, hereinafter reference will be made to chain wheels and chains, but they will be understood to include all other similar members such as pulleys and belts (which may or may not be toothed) rope sheaves and ropes, etc. The chain wheels are bearing-mounted in a suitable manner, and in the embodiment shown the rear chain wheels are mounted on a common, driven shaft 17. The shaft 17 carries an additional chain wheel 18 which can be driven by a driving unit 20 via a chain 19.

The chains 11,12 are each connected to the topmost door panel 2 via a connecting arm 21 and 22, respectively. At one end, at 23 and 24, respectively, the connecting arms are hingedly connected with corresponding links of the chains and at the other are hingedly connected to the topmost door panel adjacent its top edge at 25 and 26, respectively.

As can be seen from Fig. 1, upon clockwise rotation of the chain wheels, the arms 21,22 will move the door towards the right. As a result of the guide rails to be described hereinafter the panels will first travel upwards and then in horizontal position towards the rear.

When the chain wheels rotate counterclockwise, the arms 21,22 force the topmost panel from the rearwardly tending position shown into a substantially vertical, closed position. There is provided for at least one of the arms a stop member 27 which is arranged in such a way that the arm abuts against the stop member just after the pivoting points of the arm and the centre point of the corresponding chain wheel have traversed the position wherein said points are in one line.

As a result of this so-called overcentre closing principle, it is impossible for the door to be opened by exerting a force on the door from outside. Further, the door remains in the closed position even when the exciting energy for the driving unit drops out.

In explanation of the overcentre closing principle, it is further observed that the topmost panel, in the closed position, will bear on the sealing strips not shown in Fig. 1 at the time when the centre of the chain wheel is still just out of register with the connecting arm. Upon further rotation, the panel will be pushed against the sealing strips with more force, the strips being compressed in the process, so that the connecting arm is enabled to travel beyond the dead centre position and will abut against the stop 27. In that position, the door is completely closed. Any force exerted on the door from outside will only lead to the connecting arm being forced against the stop 27 more tightly.

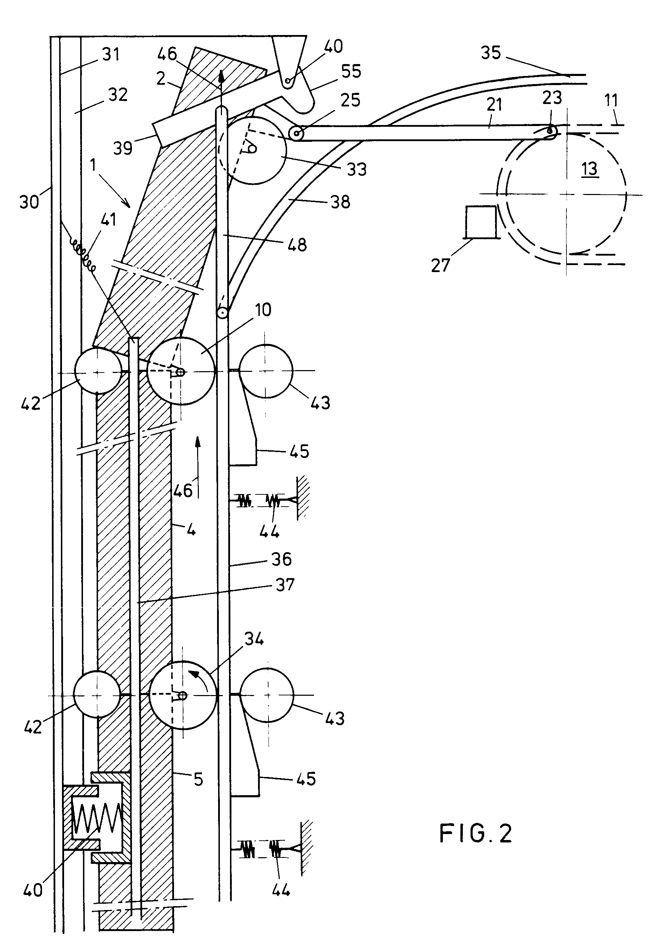

Fig. 2 is a diagrammatic view of a part of an embodiment of an overhead door assembly according to the invention. In Fig. 2 and the other figures, the same reference numerals as in Fig. 1 are used, insofar as corresponding elements are involved.

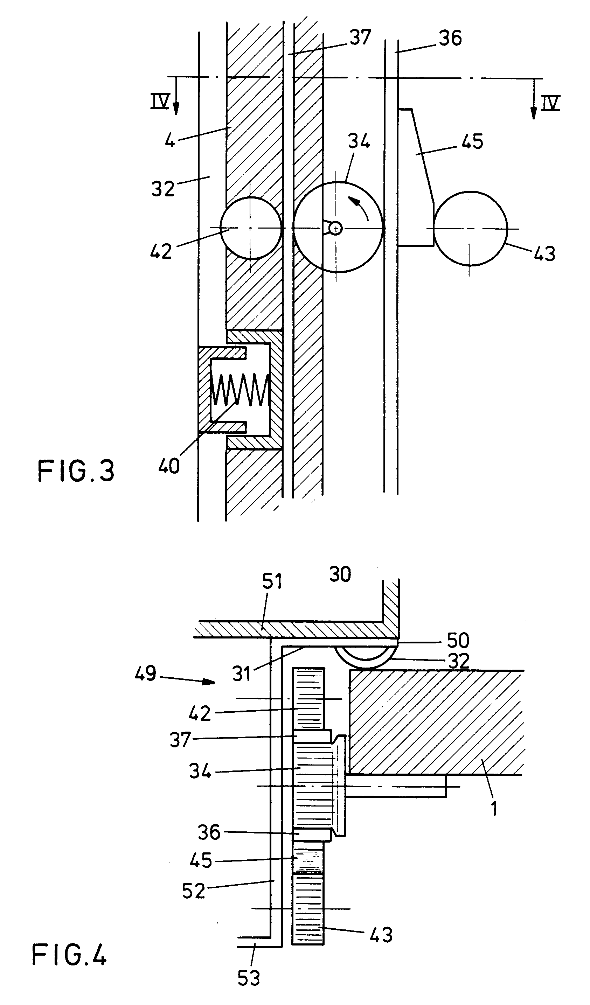

Fig. 2 shows a vertical edge of the door opening to be closed off by the overhead door 1. The vertical edge is formed by a doorpost or a suitable, preferably metal, section 30 with a stop surface 31 for the door panels. The stop surface is provided with a pliable sealing strip 32 (see also Fig. 4). The door panels are shown in practically the same position as in Fig. 1, i.e. the door has almost been shut, but it does not yet hermetically seal the door opening.

Fig. 2 diagrammatically shows the guide members for the guide wheels of the overhead door. In addition to guide wheel 10, also shown in Fig. 1, Fig. 2 further shows a topmost guide wheel 33 and a guide wheel 34 arranged at the level of the hinge line between the lowermost two panels 4 and 5. The path of travel of the guide wheels comprises a horizontal part formed by at least one horizontal guide rail 35. Further a vertical track is provided which is bounded by a rear vertical section 36 and a front vertical section 37, permitting the guide wheels of the overhead door being capable of moving between them. The horizontal guide rail 35 adjoins the rear vertical section 36 in this embodiment via a rail 38 curved as a quarter of a circle.

The rear vertical section 36 is connected to a lever 39 by means of an upwardly extending rod 48 or the like, the lever 39 having a fixed pivot 40 and being adapted to be operated by a projection of the top panel 2 or of the connecting arm 21 in such a way that when the overhead door is being closed the lever 39 pulls the rod upwards.
Advantageously, the top roller 33 can be used to operate the lever 39.

It is observed that at the other side of the door preferably a similar construction is used.

As long as the door is not entirely closed yet, the vertical sections 36,37 are spaced apart so far that each guide wheel can only be in contact with one of the vertical sections at the same time. This ensures smooth travelling of the wheels and the sections with minimal wear. Nor does any wear of the sealing strips develop because the door is not in contact with the sealing strips during the vertical movement. Both vertical sections are capable of moving towards the stop surface 31 counter to the spring force. The front vertical sections are supported against a fixed point, for example the stop surface 31, by means of a plurality of compression springs, of which one is shown at 40. Further, the front vertical sections are preferably suspended at the top by means of a tension spring 41. Further, for the front vertical sections, stops 42 are provided which bound the range of travel in the direction of the stop surface 31.

Under spring force the rear vertical sections 36 are pulled rearwardly in the direction of stops 43. For that purpose, in the embodiment shown tension springs 44 are employed. Mounted on the rear sections 36 at the level of the stops 43 are wedge-shaped members 45, whose function will be explained hereinafter.

The operation of the overhead door assembly described is as follows. When, starting from the situation shown in Fig. 2, the chain wheel 13 rotates counterclockwise, the connecting arm 21 forces the top panel 2 of the overhead door 1 into a vertical position. The free end of the lever 39 is moved upwards by the topmost guide wheel 33 or another projection of the topmost panel or the connecting arm. Via the rod 48, the lever pulls the rear vertical section 36 upwards, as indicated by arrows 46 in Fig. 2. During this movement, the wedge-shaped members cooperate with the stops 43, so that the rear vertical section is also forced forwards. Via the guide wheels, the door panels and the front vertical sections, too, are thereby forced in the direction of the support surface 31 until the door panels securely bear against the sealing strip 32. In the completely closed position of the overhead door shown in Fig. 3, the front vertical sections abut against the stops 42. The topmost panel of the door is out of reach of the rear vertical section and is directly forced against the sealing strip by the connecting arms 21,22. Accordingly, when the overhead door according to the invention is closed, it is first brought before the opening to be closed off and subsequently forced in its entirety against the sealing strip by means of a so-called plugging movement so as to effect the definitive closure. Simultaneously, the arms 21 and 22 travel beyond the dead centre position so that each movement as a result of any forces applied directly to the door itself, is blocked.

Fig. 3 shows a part of Fig. 2, but in Fig. 3 the door is disposed in the definitively closed position. The rear guide rail 36 has been moved entirely upwards and also forwards by the wedge-shaped members 45. The guide wheels of the door have thereby been moved forwards too and have forced the front guide rail 37 against the stops 42 counter to the force of the spring or springs 40. The location of the stops has been selected such that in that position the door panels themselves are securely pressed against the sealing strips 32 which have been provided roundabout in the door opening.

This is shown once more in section in Fig. 4. Fig. 4 further shows in what manner the stops 42 and 43 may be mounted on a common substantially L-shaped section 49. The section shown comprises a first leg 50 mounted on the wall 51 in which the door opening to be closed off is disposed. In this embodiment, the first leg 50 is directed towards the door opening and thus also forms the stop surface 31 on which the sealing strip 32 is mounted.

The other leg 52 extends transversely of the wall 51 and supports the stops 42,43. In this embodiment, the free edge of the leg 52 in turn is flanged outward and forms a stiffening flange 53.

When opening the door, the chains 11,12 are driven clockwise, whereby the arms 21,22 first pass the dead centre position again and are subsequently moved rearwardly by the chains, the topmost panel being carried along with them. As a result, the topmost panel tilts rearwardly so that the roller 33 (or another projection of the panel or the arm) releases the lever 39. The rear guide rail is then permitted to move downwards. For that purpose, spring means may be provided which pull and/or force the rear guide rail downwards. In the embodiment shown, the lever 39, however, is provided with a cam 55 which upon the returning movement of the connecting arm is operated by the guide wheel 33 (or another projection) whereby the rod 48, and via the rod 48 the rear guide rail 36, is moved downwards. If so desired, this movement can be supported by spring means again.

When the rear guide rail 36 move downwards, a rearward movement occurs as well under the influence of the springs 44. Then the springs 40 can force the front guide rails 37 rearwardly, whereby the door itself is released from the sealing strips 32 via the guide wheels of the door panels. The door is "unplugged".

Due to the above described downward and rearward movement of the rear guide rails, the connection with the curved rail 38 is reestablished, so that the door may subsequently be pulled up during the continued clockwise drive of the chains 11,12. During that operation, the door runs clear of the sealing strips again.

In the embodiment shown, the stops 42 and 43 are constructed as rotatable rollers, so that during the up and down movement of the rear guide rail 36 only rolling friction develops. The same applies to the front guide rail, which can be carried along to some extent in vertical direction by the guide wheels of the door when the door is being opened or closed.

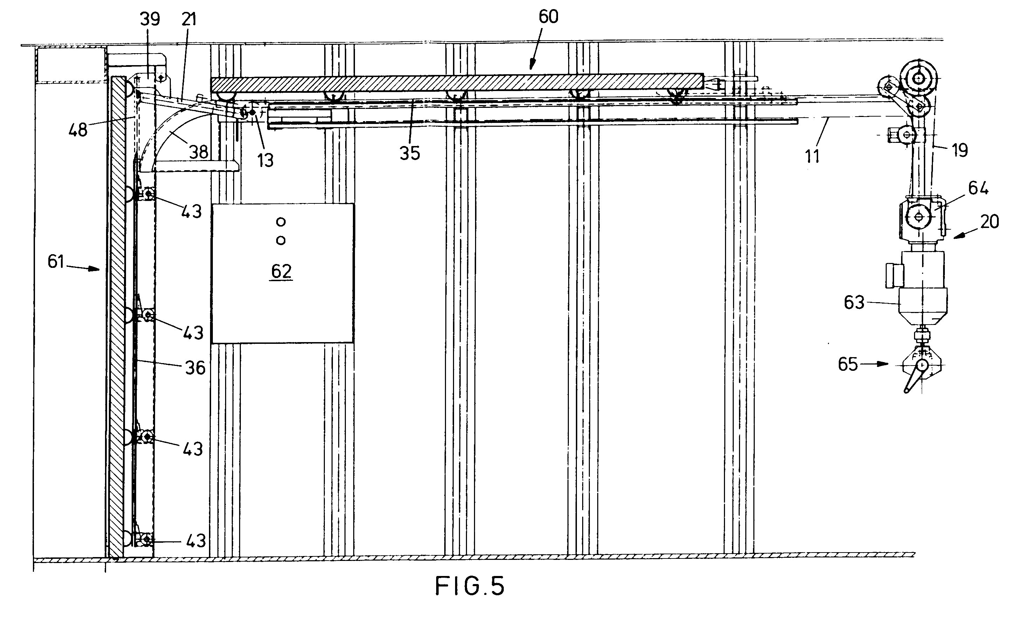

For the sake of completeness, Fig. 5 once more shows a door assembly according to the invention, in which the door is shown in entirely opened position at 60 and in entirely closed position at 61. In the open position, the door is disposed substantially in horizontal position at the level of the top edge of the door opening. The door is then supported by the horizontal rails 35 via the guide wheels. Fig. 5 further shows at 62 a control box with buttons for opening and closing the door.

In the embodiment shown, the driving means 20 comprise an electric motor 63 which is coupled with a drive chain, belt or rope 19 via a gear box 64.

The electric motor is preferably provided with an automatically operating brake which prevents rotation of the motor when the motor is not excited. It is observed that other drive sources can be used too, such as hydraulic or pneumatic drive units.

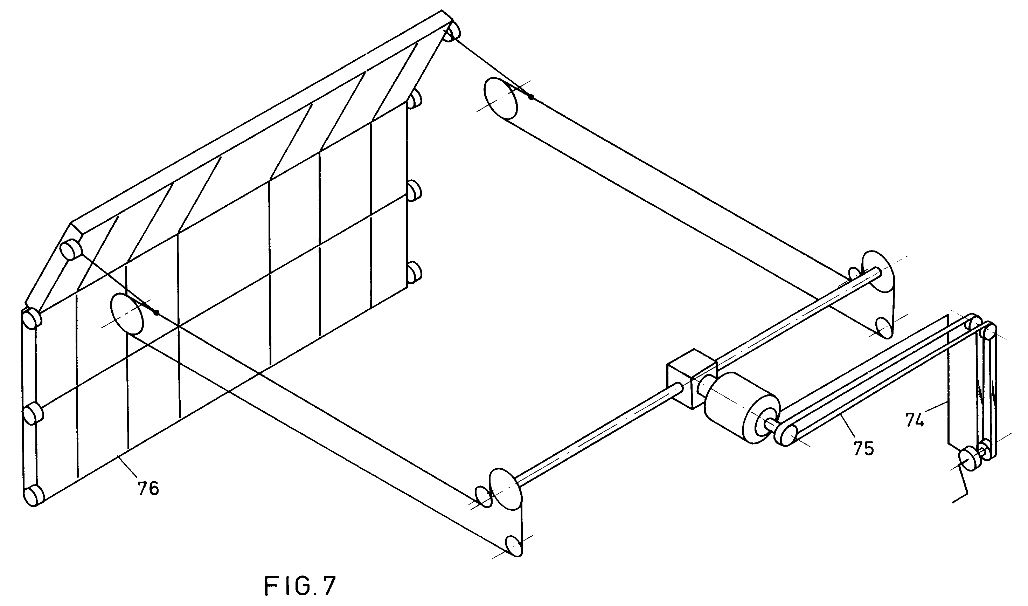

The gear box may also be directly coupled to the shaft 17, as shown diagrammatically in Fig. 7. In the embodiment of Fig. 7 the gear box and the driving motor are arranged high and central of the space to be closed off by the door, whereas in the arrangement of Figs. 1 and 5, the driving means are arranged comparatively low against a sidewall of the space to be closed off by the door.

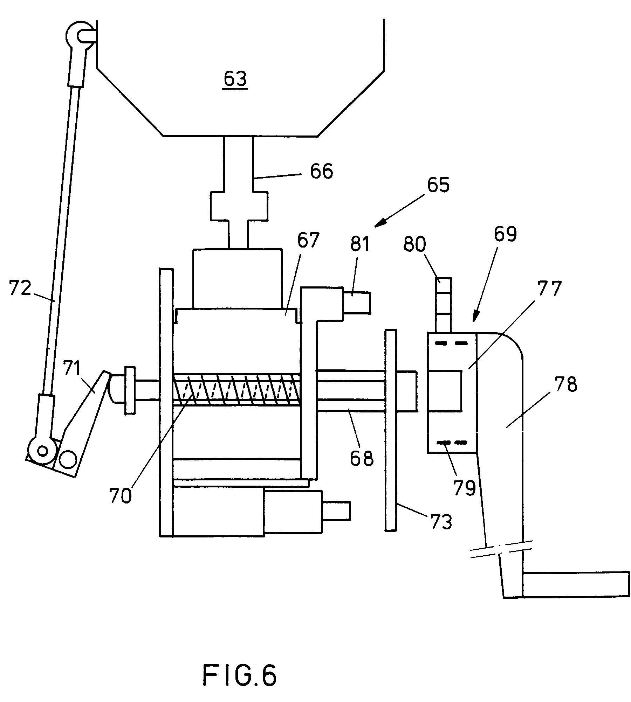

However, in either case a manually operated device is used, which can be employed in emergencies. One example of a suitable manually operated device 65 is shown diagrammatically in Fig. 6.

Fig. 6 shows a gear box 67 coupled to the shaft 66 of the driving motor 63, the gear box 67 having a driving shaft 68 on which a crank 69 can be mounted. The crank can be fitted onto the driving shaft 68 to a greater or lesser extent. When the crank is fitted onto the driving shaft as far as possible and is pushed in the direction of the gear box 67, the driving shaft 68 moves rearwardly (to the left in Fig. 6) counter to the spring force exerted by a spring 70. The result is that via a lever assembly 71,72 the brake of the driving motor is uncoupled. Further, a microswitch is operated by a plate 73 mounted on the shaft 68, the microswitch being capable of switching off the electric circuit of the motor.

The crank comprises a crank head 77 and a crank arm 78. The crank head comprises a spring brake 79 and is provided with a lug 80 which engages around a pin 81 when the crank is fitted onto the shaft 68. The construction is such that the lug 80 engages the pin 81 before the brake of the driving motor is uncoupled. Accordingly, the spring brake 79 is already active at the moment when the brake of the driving motor is uncoupled via the lever assembly 71,72.

In the embodiment shown in Fig. 7, the lever assembly coupled to the motor brake is schematically shown at 74. Further, in the embodiment of Fig. 7, not a gear box but a rope, belt or chain transmission 75 between the crank and the motor is used.

Fig. 7 further shows an entrance door 76 within the overhead door 1.

When the panels are of a suitable construction, an overhead door according to the invention is very suitable to serve as a fire-proof door for airtight separation, for example of two compartments of a track vehicle, a vessel, a building etc.

It is observed that after the foregoing, various modifications will readily occur to those skilled in the art. Thus, the door might consist of a smaller number of panels than shown, even of a single panel. Also, instead of an electric drive, a different drive can be used. Further, the upward movement of the rod 48 could be converted into a plugging movement of the rear guide rails in a different manner, for example via suitably arranged levers and/or rotating cams. It would also be possible to use a single chain with a connecting arm coupled thereto, mounted facing the middle of the door.

Further, the door assembly according to the invention could be used in a position rotated 90°, with the panels being moved in upright position from one of the sides of a door opening before and into the door opening by one or more chains in horizontal position.

## Claims

1. An overhead door assembly, suitable in particular for use in track vehicles, comprising an overhead door (1), vertical guide members (36,37) for guiding said overhead door (1) in vertical direction and horizontal guide members (35) for guiding said overhead door (1) in horizontal direction, as well as driving means (11-22) for opening and closing the door, characterized in that the driving means (11-22) are connected to the upper part (2) of the door (1) and in that said vertical guide mean (36,37) and said driving means (11-22) cooperate with each other and with the overhead door (1) in such a way that when the overhead door (1) is being closed, it is first brought in front of a door opening to be closed off by said driving means (11-22) and subsequently is brought substantially by movement of the vertical guide means (36,37) into a position where it closes off the door opening through a plugging movement.

2. An overhead door assembly according to claim 1, characterized in that said driving means (11-22) have a dead centre position and, when the door (1) is in the closing position, are disposed just beyond said dead centre position.

3. An overhead door assembly according to claim 1 or 2, characterized in that said driving means (11-22) comprise at least one endless transport member (11,12) which in operation is driven by a driving motor (63) and which is connected to one end of at least one connecting arm (21,22), said connecting arm having its other end hingedly connected to the overhead door (1) adjacent the top thereof, which transport member has been passed around a reversing wheel or return pulley (13,15) adjacent the door opening to be closed off, the point of attachment (23,24) of the transport member (11,12) and the connecting arm (21,22), during closing of the door (1), passing just across the line connecting the point of attachment (25,26) of the connecting arm (21,22) and the overhead door, and there being provided a stop member (27) which prevents further travel of the connecting arm (21,22).

4. An overhead door assembly according to any one of the preceding claims, characterized in that the overhead door (1) consists of a plurality of panels (2-5) which extend transverse of the direction of travel of the overhead door (1) and are hingedly coupled to each other, that the overhead door (1) is provided on opposite sides with guide wheels (6-10) adjacent the edges of the panels (2-5) that are directed towards each other and adjacent the top and bottom edge of the overhead door (1), said guide wheels (6-10) cooperating with the horizontal (35) and vertical guide members (36,37), and that the plugging movement of the overhead door (1) is accomplished by virtue of the fact that the vertical guide members (36,37) comprise first vertical guide rails (36) which can be displaced in horizontal direction and which during the closing of the overhead door (1) move in the direction of the door opening and press the overhead door into the closing position via the guide wheels.

5. An overhead door assembly according to claim 4, characterized in that said first vertical guide rails (36) are coupled with means (39,48) which during the closing of the overhead door (1) effect a vertical movement of said first vertical guide rails (36), and in that cooperating sloping surfaces and stops (43) are provided which as a result of the vertical movement effect the horizontal movement in the direction of the door opening.

6. An overhead door assembly according to claim 5, characterized in that the sloping surfaces are formed by one or more wedge-shaped members (45) which are mounted on the side of said first vertical guide rails (36) that is remote from the door opening.

7. An overhead door assembly according to claim 5 or 6, characterized in that the stops (43) comprise a plurality of fixed but rotatably mounted rollers.

8. An overhead door assembly according to any one of claims 5-7, characterized in that the means which effect a vertical movement of said first vertical guide rails comprise at least one lever (39) which has a fixed pivot (46) and which is coupled to said first vertical guide rails (36), which lever (39) is actuated by a projection of the overhead door (1) or a member connected thereto.

9. An overhead door assembly according to claim 8, characterized in that the projection is connected to the top part (2) of the overhead door.

10. An overhead door assembly according to claim 8 or 9, characterized in that the projection is formed by one of the guide wheels (33).

11. An overhead door assembly according to any one of claims 4-10, characterized in that said first vertical guide rails (36) when inoperative are retained against fixed stops (43) by spring force.

12. An overhead door assembly according to any one of claims 4-11, characterized in that said vertical guide members (36,37) comprise second vertical guide rails (37) extending in spaced parallel relationship to said first vertical guide rails (36), the distance between them in the inoperative position being greater than the diameter of the guide wheels (6-10).

13. An overhead door assembly according to claim 12, characterized in that said second vertical guide rail (37) are spring-mounted for spring action in horizontal direction.

14. An overhead door assembly according to claim 13, characterized in that stops (42) are arranged between said second vertical guide rails and the wall in which the door opening to be closed off is disposed.

15. An overhead door assembly according to claim 14, characterized in that the stops (42) for the second vertical guide rails (37) comprise fixed but rotatably mounted rollers.

16. An overhead door assembly according to any one of claims 12-15, characterized in that said second vertical guide rails (37) are suspended by means of springs (41) for spring action in vertical direction.

17. An overhead door assembly according to any one of claims 8-16, characterized in that said at least one lever (39) is provided with a cam (55) which during the opening of the overhead door (1) is operated by a projection of the overhead door (1) or a member connected thereto so as to provide a vertical movement for said first vertical guide rails (36), which movement is opposite the movement occurring during the closing of the door.

18. An overhead door assembly according to any one of the preceding claims, characterized in that the overhead door (1) is constructed as a fire-proof door.

19. An overhead door assembly according to any one of the preceding claims, characterized in that the driving means (11-22) comprise a motor (63) provided with a brake, which motor is coupled with a manually operated device (65) for emergencies, which device is adapted to uncouple the brake and drive the shaft (66) of the motor (63).

20. An overhead door assembly according to claim 19, characterized in that said manually operated device (65) comprises a microswitch which upon operation of the manually operated device (65) is switched and then blocks the supply of other energy to the door assembly (1).

21. Apparatus according to any one of claims 14-20, characterized by a substantially L-shaped section (49), one of the legs (52) thereof extending transverse of the wall (51) in which the door opening is disposed and vertically adjacent the door opening, and that the stops (42,43) for the first and second vertical guide rails (36,37) which are disposed on the same side of the door opening are mounted on said leg (52).

22. Apparatus according to claim 21, characterized in that the other leg (50) is disposed along the wall (51) in which the door opening is disposed and extends in the direction of the door opening, and that this leg (50) forms a stop surface (31) for the overhead door (1).

23. Apparatus according to claim 22, characterized in that said other leg (50) is provided with a sealing strip (32).

## Patentansprüche

1. Ein Obentürzusammenbau, besonders für den Einsatz in Gleiskettenfahrzeugen geeignet, bestehend aus einer Obentür (1), vertikalen Führungen (36, 37) zum Führen der genannten Obentür (1) in vertikaler Richtung und horizontalen Führungen zum Führen der genannten Obentür (1) in horizontaler Richtung, sowie Antriebsmittel (11-22) zum Öffnen und Schließen der Tür, dadurch charakterisiert, daß die Antriebsmittel (11 - 22) mit dem oberen Teil (2) der Tür (1) verbunden sind, und daß die genannten vertikalen Führungen (36, 37) und die genannten Antriebsmittel (11-22) miteinander und mit der Obentür (1) zusammenwirken, und zwar derart, daß wenn die Obentür (1) geschlossen wird, sie zunächst durch die genannten Antriebsmittel (11-22) vor die zu schließende Türöffnung gebracht wird und anschließend in der Hauptsache durch Bewegung der vertikalen Führungen (36, 37) in eine Position gebracht wird, in der sie die Türöffnung durch Einrasten verschließt.

2. Ein Obentürzusammenbau gemäß Forderung 1, dadurch charakterisiert, daß die genannten Antriebsmittel (11 - 22) einen Totpunkt haben und sich, wenn die Tür (1) in der Schließposition ist, gerade unterhalb des genannten Totpunktes befinden.

3. Ein Obentürzusammenbau gemäß Forderung 1 oder 2, dadurch charakterisiert, daß die genannten Antriebsmittel (11 - 22) mindestens ein Endlos-Transportglied (11, 12) umfassen, das im Betrieb von einem Antriebsmotor (63) angetrieben wird und das mit einem Ende von mindestens einem Verbindungsarm (21, 22) verbunden ist, wobei der genannte Arm an seinem anderen Ende durch ein Scharniergelenk mit der Obentür (1) in Nachbarschaft zu deren oberen Teil verbunden ist, und dessen Transportglied um ein Umsteuerrad oder eine Rückführscheibe (13, 15) geführt wird, das oder die in Nachbarschaft zu der zu schließenden Türöffnung angebracht ist, wobei der Befestigungspunkt (23, 24) des Transportglieds (11, 12) und des Verbindungsarms (21, 22,) während des Schließens der Tür (1) gerade über die Linie führt, die den Befestigungspunkt (25, 26) des Verbindungsarms (21, 22) und der Obentür verbindet, und wobei ein Stopper (27) angebracht ist, der verhindert, daß der Verbindungsarm (21, 22) weiter läuft.

4. Ein Obentürzusammenbau gemäß einer der vorstehenden Forderungen, dadurch charakterisiert, daß die Obentür (1) aus einer Vielzahl von Paneelen (2-5) besteht, die quer zur Laufrichtung der Obentür (1) verlaufen und die mit Scharnieren aneinander gekoppelt sind, und darin, daß die Obentür (1) auf gegenüberliegenden Seiten mit Führungsrädern (6-10) in Nachbarschaft der Kanten der Paneele (2-5) versehen ist, welche zueinander hin ausgerichtet sind und in Nachbarschaft der oberen und unteren Kante der Obentür (1) plaziert sind, und genannte Führungsräder (6-10) mit den horizontalen (35) und vertikalen (36, 37) Führungen zusammenwirken, und daß das Einrasten der Obentür (1) durch die Tatsache erreicht wird, daß die vertikalen Führungen (36, 37) erste/vordere vertikale Führungsschienen (36) umfassen, die in horizontaler Richtung verschoben werden können, und die sich während des Schließens der Obentür (1) in die Richtung der Türöffnung bewegen und die Obentür (1) über die Führungsräder in die Schließposition drücken.

5. Ein Obentürzusammenbau gemäß Forderung 4, dadurch charakterisiert, daß die genannten ersten/vorderen vertikalen Führungsschienen (36) mit Mitteln gekoppelt sind, die während des Schließens der Obentür (1) eine vertikale Bewegung der genannten ersten/vorderen vertikalen Führungsschienen (36) auslösen, und darin, daß zusammenwirkende geneigte Oberflächen und Stopper (43) vorhanden sind, die in Folge der vertikalen Bewegung die horizontale Bewegung in die Richtung der Türöffnung verursachen.

6. Ein Obentürzusammenbau gemäß Forderung 5, dadurch charakterisiert, daß die geneigten Oberflächen durch einen oder mehrere keilförmige Teile (45) gebildet werden, die an der Seite der genannten ersten/vorderen Führungsschienen (36) angebracht sind, die weiter von der Türöffnung entfernt ist.

7. Ein Obentürzusammenbau gemäß Forderung 5 oder 6, dadurch charakterisiert, daß die Stopper (43) eine Mehrzahl von fest angebrachten, aber drehbaren Rollen umfassen.

8. Ein Obentürzusammenbau gemäß einer der Forderungen 5 - 7, dadurch charakterisiert, daß die Mittel, die eine vertikale Bewegung der genannten ersten/vorderen vertikalen Führungsschienen auslösen, mindestens einen Hebel (39) aufweisen, der einen fest montierten Scharnierbolzen (46) hat, und der mit den genannten ersten/vorderen Führungsschienen (36) gekoppelt ist, und deren Hebel (39) durch Projektion der Obentür (1) oder eines damit verbundenen Teils betätigt wird.

9. Ein Obentürzusammenbau gemäß Forderung 8, dadurch charakterisiert, daß die Projektion mit dem oberen Teil (2) der Obentür verbunden ist.

10. Ein Obentürzusammenbau gemäß Forderung 8 oder 9, dadurch charakterisiert, daß die Projektion durch eines der Führungsräder (33) gebildet wird.

11. Ein Obentürzusammenbau gemäß einer der Forderungen 4 - 10, dadurch charakterisiert, daß die genannten ersten/vorderen vertikalen Führungsschienen (36), wenn sie in Ruheposition sind, durch Federkraftwirkung gegen fest montierte Stopper (43) zurückgehalten werden.

12. Ein Obentürzusammenbau gemäß einer der Forderungen 4 - 11, dadurch charakterisiert, daß die genannten vertikalen Führungen (36 - 37) zweite/hintere vertikale Führungsschienen (37) umfassen, die in paralleler Raumbeziehung zu den genannten ersten/vorderen Führungsschienen (36) verlaufen, wobei der Abstand zwischen ihnen in der Ruheposition größer ist als der Durchmesser der Führungsräder (6-10).

13. Ein Obentürzusammenbau gemäß Forderung 12, dadurch charakterisiert, daß die genannten zweiten/hinteren vertikalen Führungsschienen (37) federmontiert sind für Federkraftwirkung in horizontaler Richtung.

14. Ein Obentürzusammenbau gemäß Forderung 13, dadurch charakterisiert, daß Stopper (42) zwischen den genannten zweiten/hinteren vertikalen Führungsschienen und der Wand angeordnet sind, in der sich die zu schließende Türöffnung befindet.

15. Ein Obentürzusammenbau gemäß Forderung 14, dadurch charakterisiert, daß die Stopper (42) für die zweiten/hinteren vertikalen Führungsschienen (37) fest montierte, aber drehbare Rollen umfassen.

16. Ein Obentürzusammenbau gemäß einer der Forderungen 12 - 15, dadurch charakterisiert, daß die genannten zweiten/hinteren vertikalen Führungsschienen (37) mittels Federn (40) für Federkraftwirkung in vertikaler Richtung aufgehängt sind.

17. Ein Obentürzusammenbau gemäß einer der Forderungen 8 - 16, dadurch charakterisiert, daß mindestens ein Hebel (39) mit einer Nocke (55) versehen ist, die während des Öffnens der Obentür (1) durch eine Projektion der Obentür (1) oder eines damit verbundenen Teils betrieben wird, um eine vertikale Bewegung der genannten ersten/vorderen vertikalen Führungsschienen (36) zu erzeugen, welche Bewegung das Gegenteil der Bewegung darstellt, die während des Schließens der Tür ausgeführt wird.

18. Ein Obentürzusammenbau gemäß einer der vorstehenden Forderungen, dadurch charakterisiert, daß die Obentür (1) als feuerfeste Tür konstruiert ist.

19. Ein Obentürzusammenbau gemäß einer der vorstehenden Forderungen, dadurch charakterisiert, daß die Antriebsmittel (11 - 22) einen Motor (63) umfassen, der mit einer Bremse ausgestattet ist, und welcher Motor mit einer manuell zu bedienenden Vorrichtung (65) für Notfälle gekuppelt ist, welche Vorrichtung dazu dient, die Bremse auszukuppeln und die Antriebswelle (66) des Motors (63) anzutreiben.

20. Ein Obentürzusammenbau gemäß Forderung 19, dadurch charakterisiert, daß die genannte manuell zu bedienende Vorrichtung (65) einen Mikroschalter aufweist, der bei Bedienung der manuell zu bedienenden Vorrichtung (65) geschaltet wird und dann die Zufuhr von anderer Energie zum Obentürzusammenbau (1) blockiert.

21. Apparat gemäß einer der Forderungen 14 - 20, dadurch charakterisiert, daß von einer substantiell L-förmigen Zone eines der Beine (52) quer über die Wand (51) verläuft, in welcher sich die Türöffnung befindet, und vertikal der Türöffnung benachbart ist, und daß die Stopper (42, 43) für die ersten/vorderen und zweiten/hinteren Führungsschienen (36, 37), die sich auf der selben Seite der Türöffnung befinden, auf dem genannten Bein (52) montiert sind.

22. Apparat gemäß der Forderung 21, dadurch charakterisiert, daß das andere Bein (52) entlang der Wand (51) verläuft, in der sich die Türöffnung befindet, und in die Richtung der Türöffnung verläuft, und daß dieses Bein eine Bremsfläche (31) für die Obentür (1) bildet.

23. Apparat gemäß der Forderung 22, dadurch charakterisiert, daß das genannte andere Bein mit einem Dichtungsstreifen (32) versehen ist.

## Revendications

1. Assemblage de porte basculante convenant en particulier pour l'utilisation dans des véhicules chenillés comprenant une porte basculante (1), des éléments de guidage vertical (36, 37) pour guider ladite porte basculante (1) en direction verticale et des éléments de guidage horizontal (35) pour guider ladite porte basculante (1) en direction horizontale ainsi que des moyens d'entraînement (11-22) pour ouvrir et fermer la porte, caractérisé en ce que les moyens d'entraînement (11-22) sont raccordés à la partie supérieure (2) de la porte (1) et en ce que lesdits moyens de guidage vertical (36,37) et lesdits moyens d'entraînement (11-22) coopèrent l'un avec l'autre et avec la porte basculante (1) de telle manière que, lorsque la porte basculante (1) est en train de se fermer, elle est d'abord amenée à l'avant de l'ouverture de la porte à fermer par lesdits moyens d'entraînement (11-22) et ensuite amenée dans une position où elle ferme l'ouverture de la porte essentiellement par le mouvement des moyens de guidage vertical (36,37) par l'intermédiaire d'un mouvement d'obturation.

2. Assemblage de porte basculante selon la revendication 1, caractérisé en ce que lesdits moyens d'entraînement (11-22) peuvent adopter une position de point mort et, lorsque la porte (1) est en position de fermeture, sont disposés juste au-delà de ladite position de point mort.

3. Assemblage de porte basculante selon la revendication 1 ou 2, caractérisé en ce que lesdits moyens d'entraînement (11-22) comprennent au moins un élément de transport sans fin (11, 12) qui est entraîné en marche par un moteur d'entraînement (63) et est raccordé à une extrémité d'au moins un bras de liaison (21, 22), ledit bras de liaison possédant son autre extrémité articulée à la porte basculante (1) de manière adjacente au haut de celle-ci, lequel élément de transport a été placé autour d'une roue d'inversion ou d'une poulie de retour (13, 15) adjacente à l'ouverture de la porte à fermer, le point de fixation (23, 24) des éléments de transport (11, 12) et des bras de liaison (21, 22) pendant la fermeture de la porte (1) passant juste à travers la ligne reliant le point de fixation (25, 26) du bras de liaison (21, 22) et la porte basculante et un élément d'arrêt (27) qui empêche le déplacement ultérieur du bras de liaison (21, 22) étant prévu.

4. Assemblage de porte basculante selon l'une quelconque des revendications précédentes, caractérisé en ce que la porte basculante (1) se compose de plusieurs panneaux (2-5) qui s'étendent transversalement par rapport à la direction de la course de la porte basculante (1) et sont articulés l'un à l'autre, en ce que la porte basculante (1) est munie sur ses côtés opposés de roues de guidage (6-10) adjacentes aux bords des panneaux (2-5) qui sont dirigées l'une vers l'autre et sont adjacentes aux bords supérieurs et inférieurs de la porte basculante (1), lesdites roues de guidage (6-10) coopérant avec les éléments de guidage horizontaux (35) et verticaux (36, 37) en ce que le mouvement d'obturation de la porte basculante (1) est effectué par le fait que les éléments de guidage vertical (36, 37) comprennent des premiers rails de guidage vertical (36) qui peuvent être déplacés en direction horizontale et qui, pendant la fermeture de la porte basculante (1), se déplacent dans la direction de l'ouverture de la porte et pressent la porte basculante dans la position de fermeture par l'intermédiaire des roues de guidage.

5. Assemblage de porte basculante selon la revendication 4, caractérisé en ce que lesdits premiers rails de guidage vertical (36) sont raccordés à des moyens (39, 48) qui, pendant la fermeture de la porte basculante (1), assurent un mouvement vertical desdits premiers rails de guidage vertical (36) et en ce que les surfaces inclinées et butées (43) coopérant sont prévues et, à la suite du mouvement vertical, assurent le mouvement horizontal dans la direction de l'ouverture de la porte.

6. Assemblage de porte basculante selon la revendication 5, caractérisé en ce que les surfaces inclinées sont formées par un ou plusieurs éléments (45) cunéiformes qui sont fixés sur le côté desdits premiers rails de guidage vertical (36) à l'opposé de l'ouverture de la porte.

7. Assemblage de porte basculante selon la revendication 5 ou 6, caractérisé en ce que les arrêts (43) se composent d'une pluralité de rouleaux montés de manière fixe mais à rotation.

8. Assemblage de porte basculante selon l'une quelconque des revendications 5 à 7, caractérisé en ce que les moyens qui assurent un mouvement vertical desdits premiers rails de guidage vertical se composent d'au moins un levier (39) qui possède un pivot fixe (40) et est couplé auxdits premiers rails de guidage vertical (36), lequel levier (39) est actionné par une saillie de la porte basculante (1) ou un élément raccordé à celle-ci.

9. Assemblage de porte basculante selon la revendication 8, caractérisé en ce que la saillie est raccordée à la partie supérieure (2) de la porte basculante.

10. Assemblage de porte basculante selon la revendication 8 ou 9, caractérisé en ce que la saillie est formée par une des roues de guidage (33).

11. Assemblage de porte basculante selon l'une quelconque des revendications 4 à 10, caractérisé en ce que lesdits premiers rails de guidage vertical (36), lorsqu'ils ne sont pas opérationnels, sont retenus contre des butées fixes (43) par une force de ressort.

12. Assemblage de porte basculante selon l'une quelconque des revendications 4 à 11, caractérisé en ce que lesdits rails de guidage vertical (36, 37) se composent d'un deuxième rail de guidage vertical (37) s'étendant dans une relation parallèle espacée par rapport auxdits premiers rails de guidage (36), la distance entre eux dans la position non opérationnelle étant supérieure au diamètre des roues de guidage (6-10).

13. Assemblage de porte basculante selon la revendication 12, caractérisé en ce que lesdits deuxièmes rails de guidage vertical (37) sont montés à ressort pour une action de rappel en direction horizontale.

14. Assemblage de porte basculante selon la revendication 13, caractérisé en ce que les butées (42) sont disposées entre lesdits deuxièmes rails de guidage vertical et la paroi dans laquelle l'ouverture de la porte à fermer est disposée.

15. Assemblage de porte basculante selon la revendication 14, caractérisé en ce que les butées (42) pour les deuxièmes rails de guidage vertical (37) comprennent des rouleaux montés de manière fixe mais à rotation.

16. Assemblage de porte basculante selon l'une quelconque des revendications 12 à 15, caractérisé en ce que lesdits deuxièmes rails de guidage vertical (37) sont suspendus au moyen de ressorts (41) pour une action de rappel en direction verticale.

17. Assemblage de porte basculante selon l'une quelconque des revendications 8 à 16, caractérisé en ce qu'il y a au moins un levier (39) muni d'une came (55) qui, pendant l'ouverture de la porte basculante (1), est actionné par une saillie de la porte basculante (1) ou un élément raccordé à celle-ci afin d'assurer un mouvement vertical pour lesdits premiers rails de guidage vertical (36), lequel mouvement est opposé au mouvement survenant pendant la fermeture de la porte.

18. Assemblage de porte basculante selon l'une quelconque des revendications précédentes, caractérisé en ce que la porte basculante (1) est conçue comme une porte à l'épreuve du feu.

19. Assemblage de porte basculante selon l'une quelconque des revendications précédentes, caractérisé en ce que les moyens d'entraînement (11-22) se composent d'un moteur (63) muni d'un frein, lequel moteur est couplé à un dispositif (65) actionné manuellement pour les urgences, lequel dispositif est destiné à désaccoupler le frein et entraîner l'arbre (66) du moteur (63).

20. Assemblage de porte basculante selon la revendication 19, caractérisé en ce que ledit dispositif actionné manuellement (65) se compose d'un microcommutateur qui, lors de l'actionnement du dispositif actionné manuellement (65), est commuté et bloque alors l'alimentation de toute autre énergie à l'assemblage de porte (1).

21. Appareil selon l'une quelconque des revendications 14 à 20, caractérisé par une section en forme essentiellement de L (49), un des montants (52) de celui-ci s'étendant transversalement par rapport à la paroi (51) dans laquelle l'ouverture de porte est disposée et verticalement de manière adjacente à l'ouverture de porte et en ce que les butées (42, 43) pour les premiers et deuxièmes rails de guidage vertical (36, 37) qui sont disposées du même côté de l'ouverture de porte sont montées sur lesdits montants (52).

22. Appareil selon la revendication 21, caractérisé en ce que l'autre montant (50) est disposé le long de la paroi (51) dans laquelle l'ouverture de porte est disposée et s'étend dans la direction de l'ouverture de porte et en ce que ce montant (50) forme une surface de butée (31) pour la porte basculante (1).

23. Appareil selon la revendication 22, caractérisé en ce que ledit autre montant (50) est muni d'une bande d'étanchéité (32).
